# EUROPÄISCHE PATENTSCHRIFT

(11) **EP 1 552 121 B1**
(45) Veröffentlichungstag und Bekanntmachung des Hinweises auf die Patenterteilung: **19.07.2006**
(21) Anmeldenummer: 04734255.5
(22) Anmeldetag: 21.05.2004
(51) Int. Cl.: F01N 7/18, F16L 27/111, F16L 51/02, F16L 27/11

(54) **FLEXIBLES LEITUNGSELEMENT**
FLEXIBLE LINE ELEMENT
ELEMENT DE CONDUITE FLEXIBLE

(30) Priorität: 05.08.2003 DE 20312251 U
(43) Veröffentlichungstag der Anmeldung: 13.07.2005
(73) Patentinhaber: Witzenmann GmbH, 75175 Pforzheim (DE)
(72) Erfinder: GUKELBERGER, Marc, 76199 Karlsruhe (DE)
(74) Vertreter: Blumenröhr, Dietrich
(86) Internationale Anmeldenummer: PCT/EP2004/005523
(87) Internationale Veröffentlichungsnummer: WO 2005/024197

(56) Entgegenhaltungen:
- EP-A- 0 305 891
- EP-A- 0 493 680
- EP-A- 0 889 210
- EP-A- 0 974 741
- EP-A- 0 989 289
- DE-A- 19 744 663
- DE-U- 29 503 927
- GB-A- 2 333 566
- US-A- 5 901 754
- US-B1- 6 240 969

## Beschreibung

Die Erfindung betrifft ein flexibles Leitungselement, insbesondere für Abgasleitungen von Verbrennungsmotoren bei Kraftfahrzeugen, mit einem mit zylindrischen Anschlussenden versehenen schraubengangförmig oder ringgewellten Balg aus Metall und einem koaxial innerhalb des Balgs angeordneten Metallschlauch, der mit seinen axialen Endstücken zumindest mittelbar an den Balganschlussenden festgelegt ist, und mit einem auf der radialen Außenseite des Balgs angeordneten äußeren Metallschlauch, der mit seinen axialen Endstücken zumindest mittelbar an den Balganschlussenden festgelegt ist.

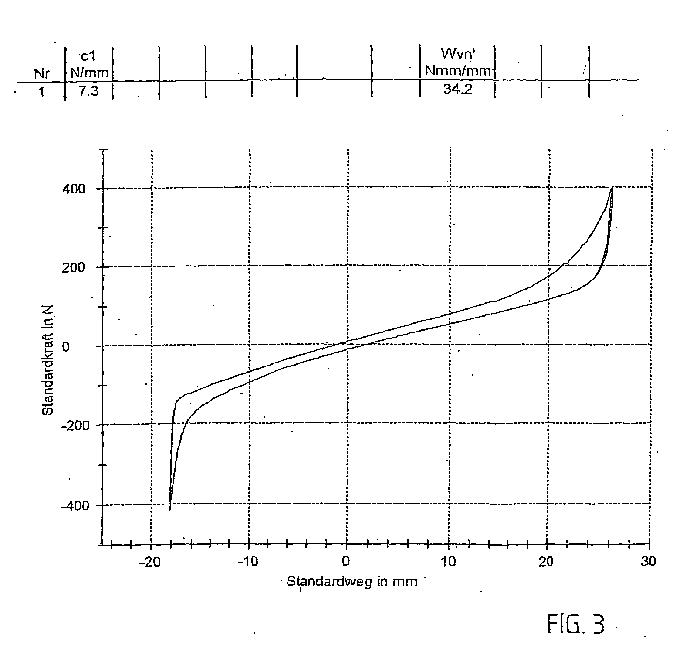

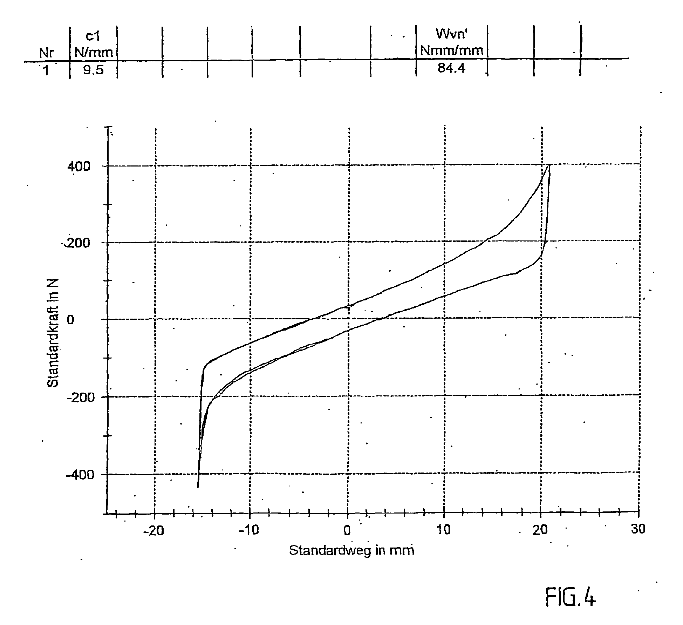

Bei üblichen derartigen Leitungselementen besteht der innere Metalischlauch aus einem Agraff- oder Wickelschlauch, der aus einem schraubengangförmig gewickelten Metallband hergestellt ist. Ein solcher innerer Wickelschlaüch, der auch als Liner bezeichnet wird, besitzt jedoch den Nachteil, dass er bei Verwendung in Abgasanlagen von Dieselmotoren Temperaturen zwischen 400 °C und 700 °C ausgesetzt ist und damit genau einem solchen Temperaturenbereich, in dem für den Liner die Gefahr von Wärmeversteifungen besteht. Hierbei nimmt die Verlustarbeit um einen Faktor 2 bis 4 zu, wie es aus den Figuren 3 und 4 ersichtlich ist, die das Ergebnis von entsprechenden statischen Messungen zeigen, auf die nachfolgend näher eingegangen werden soll. Die so drastisch erhöhte Verlustarbeit beeinflusst direkt die gesamte Steifigkeit des Leitungselementes und mindert somit die Entkopplungsfähigkeiten dieser Leitungselemente, die dazu gebraucht werden, die Motorschwingungen von der Abgasanlage fern zu halten.

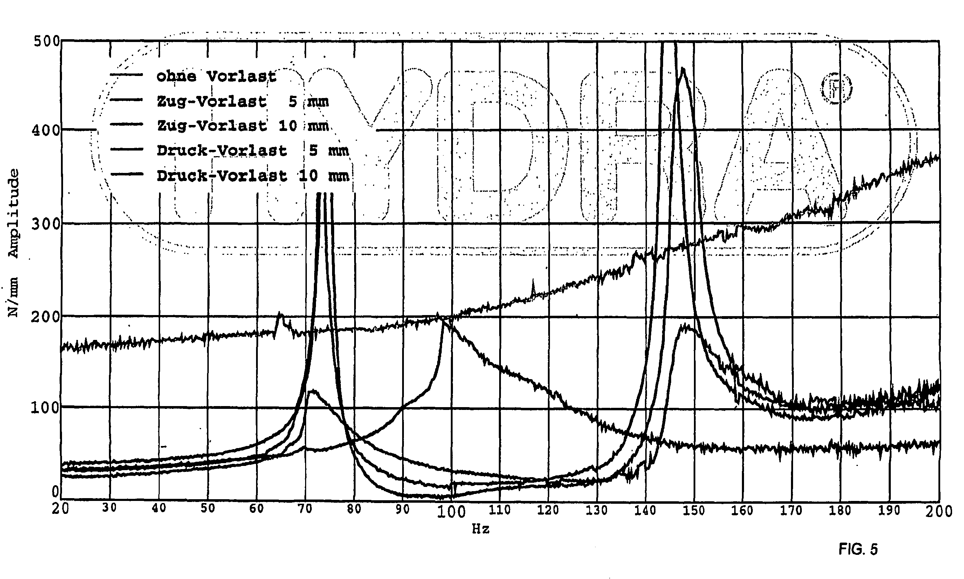

Die üblichen derartigen Leitungselemente weisen darüber hinaus auf ihrer Außenseite als äußeren Metallschlauch ein Außengeflecht auf, welches aus sich kreuzenden Metalldrähten geflochten ist. Das Außengeflecht, das unter anderem die Aufgabe besitzt, als Axiallängenbegrenzungselement zu fungieren, ist jedoch nicht dazu in der Lage, etwaige Balgeigenresonanzen hinreichend zu bedämpfen, was ebenso Auswirkungen auf die Entkopplung der Motorschwingungen von der Abgasanlage hat, wie aus Figur 5 ersichtlich ist, welche das Ergebnis einer dynamischen Messung zeigt, auf die nachfolgend ebenfalls näher eingegangen werden soll.

Von diesem Stand der Technik ausgehend liegt der vorliegenden Erfindung die Aufgabe zugrunde, ein flexibles Leitungselement der eingangs genannten Art hinsichtlich seiner Entkopplungseigenschaften von nieder- und hochfrequenten Motorbewegungen gegenüber der Abgasanlage zu verbessern.

Diese Aufgabe wird erfindungsgemäß durch die Merkmale von Anspruch 1 gelöst.

Dieser Aufbau des Leitungselements mit Innengeflecht und Außengestricke hat zunächst einmal als wesentlichen Vorteil, dass keine Wärmeversteifung mehr in dem kritischen Temperaturenbereich zwischen 400 °C und 700 °C droht, da das demgemäß kritische Bauteile, nämlich der Liner, also der innere Wickelschlauch bei dem erfindungsgemäßen Leitungselement weggelassen ist. Das Innengeflecht, das in dem genannten kritischen Temperaturenbereich vorteilhafterweise keine Wärmeversteifung besitzt, dient auch an der neuen Position auf der radialen Innenseite des Balgs als Längenbegrenzungselement und übernimmt darüber hinaus auch die Funktion des inneren Wickelschlauchs als Dämpfungselement, insbesondere wenn das Innengeflecht mit flachem Geflechtswinkel relativ steif ausgebildet ist. Aufgrund der fehlenden Wärmeversteifung und der sich demgemäß nicht ändernden Verlustarbeit, ist es möglich, das Leitungselement hinsichtlich des Geflechts auszulegen, ohne dass es in Abhängigkeit der Temperatur seine Entkopplungseigenschaften wesentlich verändert.

Ein weiterer erfindungsgemäßer Vorteil wird dadurch erhalten, dass das äußere Geflecht des Standes der Technik ersetzt wird durch ein Außengestricke, das immer an den Balgaußenkrempen anliegt und so in der Lage ist, die Balgeigenresonanzen optimal zu bedämpfen.

Um das Außengestricke in dieser Anlage an den Balgaußenkrempen zu halten, jedoch Relativbewegungen zwischen Außengestricke und Balg zuzulassen, ist es empfehlenswert, das Gestricke nur an den Balganschlussenden insbesondere über äußere Endhülsen festzulegen, welche aus einem Ringelement bestehen können, die über das Außengestricke im Bereich der Balganschlussenden geschoben und zusammen mit diesen festgelegt, beispielsweise verpresst werden. Hierbei erfolgt die Festlegung zweckmäßigerweise auf einem Querschnittsniveau, das in etwa dem lichten Innenquerschnitt des Balgs entspricht. Dazu muss das Außengestricke im Bereich seiner Festlegung an den Balganschlussenden radial nach innen gezogen werden, was das Anliegen an den Balgaußenkrempen noch weiter fördert.

Was das Innengeflecht betrifft, so kann dieses entweder ebenfalls im Bereich der Balganschlussenden mit in die Verbindung von Balganschlussende und Außengestricke eingebunden sein; oder aber das Innengeflecht wird über zusätzliche Innenhülsen an den Balganschlussenden festgelegt, wobei das Geflecht selbst axial beabstandet von den Balganschlussenden an der jeweiligen Innenhülse fixiert und beispielsweise angeschweißt sein kann.

Bei Verwendung einer Innenhülse lässt sich in vorteilhafterweise sicherstellen, dass das Innengeflecht einen radialen Abstand gegenüber den lnnenkrempen des Balgs aufweist, um eine gegenseitige Berührung zwischen Geflecht und Balg - zumindest im nicht ausgelenkten Zustand - auszuschließen. Hierzu kann die Innenhülse einen Absatz aufweisen, um aus der Festlegungsposition an den Balganschlussenden, die ja ungefähr dem lichten Innenquerschnitt des Balgs entspricht, radial nach innen versetzt achsparallel zum Balg zu verlaufen und dort an einer solchen radial beabstandeten Querschnittsposition das Geflecht beispielsweise über Punktschweißverbindungen zu halten.

Was das Geflecht betrifft, so empfiehlt sich, dieses mit einer Schlaglänge zwischen 30 mm und 190 mm auszubilden und außerdem mit einer Drahtstärke zwischen 0,20 mm und 0,40 mm. Ein demgemäß gestaltetes Geflecht besitzt eine ausreichende Steifigkeit und ist dadurch auch in der Lage, bei den durch die Motorbewegungen vorgegebenen Bewegungen weder axial in Druckrichtung noch lateral in Anschlag zu gelangen, was ansonsten die Entkopplungsfunktion des erfindungsgemäßen Leitungselements beeinträchtigen würde.

Das Außengestricke wiederum ist zweckmäßigerweise so gestaltet, dass die Eigenresonanzen des Balgs im Frequenzbereich zwischen 200 und 250 Hz und insbesondere zwischen 80 und 140 Hz bedämpft werden.
Insgesamt erhält man durch das erfindungsgemäße Leitungselement eine optimale Entkopplung der Motorbewegungen von der Abgasanlage dadurch, dass das Leitungselement im linearen Arbeitsbereich der axialen, lateralen und angularen statischen Kennlinien arbeitet.

Weitere Merkmale und Vorteile der vorliegenden Erfindung ergeben sich aus der nachfolgenden Beschreibung eines Ausführungsbeispiels sowie verschiedener Messungen, die nachfolgend beschrieben werden.
- Figur 1: zeigt das erfindungsgemäße Leitungselement in teilweise geschnittener Seitenansicht;
- Figur 1a: zeigt ein Detail Z dieses Leitungselements aus Figur 1;
- Figur 2: zeigt einen schematisch in Seitenansicht dargestellten Geflechtsschlauch zur Definition der Kenngröße Schlaglänge;
- Figur 3: zeigt die Verlustarbeit eines bekannten Leitungselements mit innerem Wickelschlauch im Neuzustand im Rahmen einer statischen Messung;
- Figur 4: zeigt die Verlustarbeit des Leitungselements aus Figur 3 im ausgelagerten Zustand im Rahmen einer statischen Messung;
- Figur 5: zeigt das Schwingungsverhalten im Rahmen von dynamischen Messungen bei einer bekannten Schlauchleitung mit Außengeflecht;
- Figur 6: zeigt das Schwingungsverhalten des erfindungsgemäßen Leitungselements mit Außengestricke im Rahmen von dynamischen Messungen.

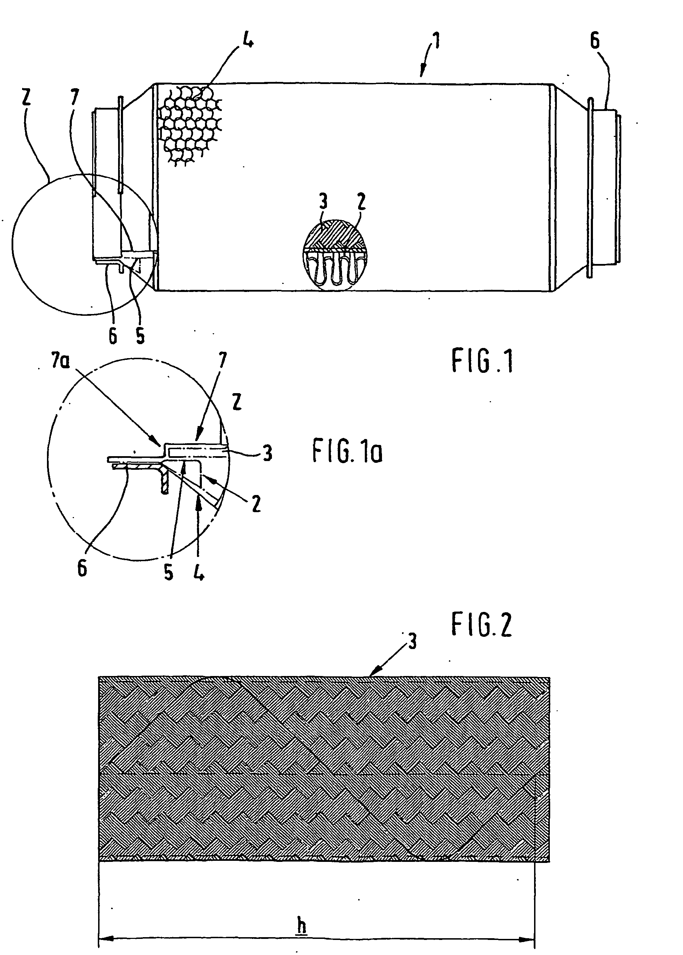

In Figur 1 ist das erfindungsgemäße Leitungselement in Seitenansicht mit teilweise im Axialschnitt gezeigten Bereichen dargestellt. Dieses Leitungselement 1 besteht aus einem ringgewellten Metallschlauch 2, einem auf dessen radialer Innenseite angeordneten und sich achsparallel zum Balg erstreckenden Geflechtsschlauch 3 aus sich kreuzenden Geflechtsdrähten und aus einem auf der radialen Außenseite des Balgs 2 angeordneten Gestrickeschlauch 4. Der Balg 2 ist zum Anschluss an benachbarte Leitungsbauteile mit zylindrischen Anschlussenden 5 versehen, deren Querschnitt in etwa dem lichten Innenquerschnitt des Balgs 2 entspricht. Im Bereich dieser Balganschlussenden 5 ist das Außengestricke 4 am Balg 2 festgelegt, wozu es über ein das Außengestricke 4 auf seiner radialen Außenseite beaufschlagende äußere Endhülse 6 gegen das jeweilige Balganschlussende 5 verpresst ist.

Das Innengeflecht 3 ist nur mittelbar an den Balganschlussenden 5 festgelegt und zwar indem es an Innenhülsen 7 angepunktet ist, welche wiederum mit der radialen Innenseite der Balganschlussenden 5 verbunden und an diesen über die vorerwähnte Pressverbindung festgelegt ist. Die Innenhülsen 7 sind mit einem umlaufenden Absatz derart versehen, dass sie von einem größeren Querschnitt mit einem Außenquerschnitt, der dem Innenquerschnitt der Balganschlussenden 5 entspricht, hin zu einem kleineren Querschnitt in dem von den Balganschlussenden 5 axial benachbarten Bereich reduziert sind, um in diesem Bereich mit kleinerem Querschnitt den Geflechtsschlauch 3 so festzulegen, dass er einen radialen Abstand gegenüber den Innenkrempen des Balgs 2 aufweist. Hierdurch lässt sich sicherstellen, dass das Innengeflecht - zumindest im nicht ausgelenkten Zustand des Leitungselements - nicht an den Balg-krempen anliegt und sich somit beide Bauteile hinsichtlich Ihrer Beweglichkeit nicht beeinträchtigen.

Im Gegensatz dazu wird jedoch das Außengestricke 4 so ausgebildet, dass es ständig an den Außenkrempen des Balgs 2 anliegt, indem dessen lichter Innenquerschnitt etwas kleiner ausgebildet ist als der lichte Außenquerschnitt des Balgs. Durch diese ständige einer Vorspannung entsprechende gegenseitige Anlage erreicht das Außengestricke, die Balgeigenresonanzenfrequenzen des Balgs zu bedämpfen, was den äußeren Geflechtsschläuchen des Standes der Technik nicht möglich ist. Das Außengestricke 4 wird im Bereich der Anschfussenden radial nach innen auf das Querschnittsgrößenmaß gezogen, das dem Außenquerschnitt der Balganschlussenden 5 entspricht und dort in der erwähnten Art und Weise über die Endhülsen festgelegt.

In Figur 1a erkennt man in der Detailansicht, dass das Innengeflecht im Bereich des erwähnten Absatzes 7a endet, in dem Bereich, wo die Innenhülse 7 ihren Querschnitt verändert.

In Figur 2 ist für ein schematisch dargestelltes Geflecht, das das Innengeflecht 3 darstellen soll, der. Parameter "Schlaglänge" erläutert: Diese Schlaglänge h entspricht der axialen Länge, die ein Geflechtsdraht in dem Längenbereich einer sich einmal über den Schlauchumfang schraubenförmig umlaufenden Windung aufweist. Je nach Durchmesser des Innengeflechts empfiehlt sich eine Schlaglänge h zwischen 30 mm und 190 mm. Außerdem ist die Drahtstärke, also die Dicke eines einzelnen Geflechtsdrahtes zweckmäßigerweise zwischen 0,20 mm und 0,40 mm gewählt.

Welche Effekte die vorliegende Erfindung gerade hinsichtlich der Größen Verlustarbeit und Balgeigenresonanzfrequenz besitzt, lässt sich aus den nachfolgenden Figuren 3 bis 8 ableiten:

In Figur 3 sind die Ergebnisse von statischen Messungen an einem im Neuzustand befindlichen flexiblen Leitungselement des Standes der Technik mit einem üblichen inneren Metallwickelschlauch dargestellt. Aus der Messung in Figur 3 lässt sich ableiten, dass die Verlustarbeit in diesem Falle 34,2 Nmm/mm beträgt.

Figur 4 zeigt dieselben statischen Messungen beim selben Bauteil wie in Figur 3, nur diesmal im ausgelagerten Zustand, d. h., dass das flexible Leitungselement bereits den kritischen Temperaturen zwischen 400 °C und 700 °C ausgesetzt war, was im Versuchsfall dadurch simuliert wurde, dass das flexible Leitungselement 1 h lang 450 °C ausgesetzt war. Die Verlustarbeit, die die von den Kurven umschlossene Fläche kennzeichnet, beträgt in diesem Falle 84,4 Nmm/mm. Demgemäß ergibt sich ein Versteifungsfaktor des Leitungselementes gegenüber dem Neuzustand von 2,5.

Nicht dargestellt ist demgegenüber ein dem flexiblen Leitungselement des Standes der Technik entsprechendes Bauteil, bei dem der innere Wickelschlauch durch ein Innengeflecht ersetzt worden ist. Im Neuzustand beträgt die Verlustarbeit dieses Leitungselements 24,1 Nmm/mm. Wird der Zustand im Rahmen statischer Messungen nactLeinem Aussetzen des Leitungselements aus Figur 7 1 h lang bei 450 °C gegenübergestellt, so erhält man Folgendes: Die Verlustarbeit hat gegenüber dem Neuzustand nicht zugenommen und demgemäß weist auch dieses gemessene Leitungselement mit Außengeflecht, Balg und Innengeflecht dadurch keine Wärmeversteifung auf, dass der innere Wechselschlauch durch den inneren Geflechtsschlauch ersetzt ist. Diese Messungen, die repräsentativ für beliebig wiederholbare Messungen mit verschiedensten Varianten von Leitungselementen sind, veranschaulichen den Effekt, den man alleine dadurch erzielt, dass bei einem üblichen Leitungselement der innere Wickelschlauch durch einen inneren Geflechtsschlauch ersetzt wird.

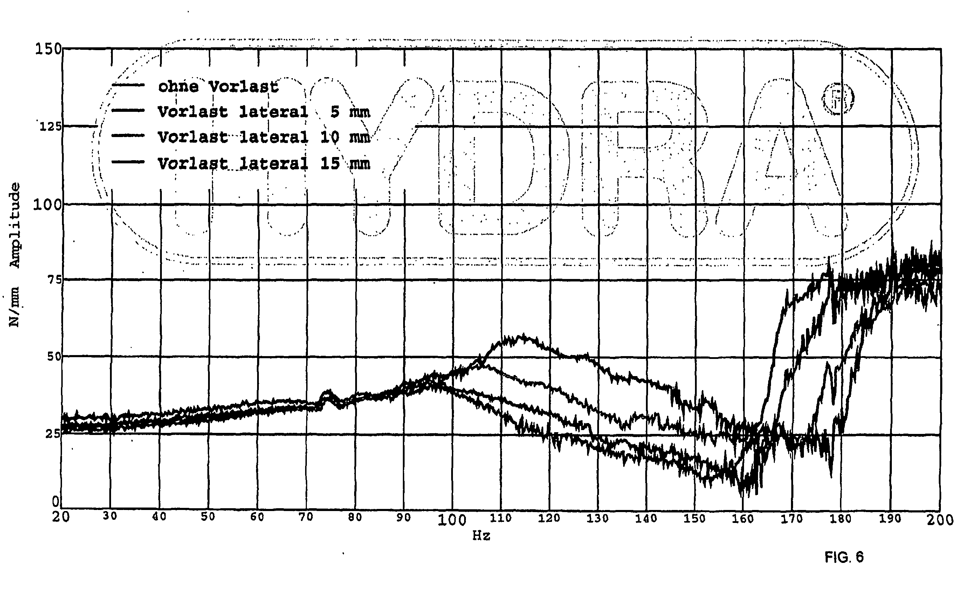

Die Figuren 5 und 6 zeigen nunmehr die Auswirkungen, die man zusätzlich bei Austausch des üblicherweise verwendeten Außengeflechts durch ein Außengestricke erhält: Figur 5 zeigt für verschiedene Belastungszustände im Zuge von dynamischen Messungen an einem flexiblen Leitungselement mit einem äußeren Geflechtsschlauch zwei Frequenzbereiche mit besonders ausgeprägten Amplituden und zwar etwa bei 85 Hz und bei ca. 145 Hz. Diese Frequenzbereiche mit maximalen Amplituden entsprechen den Eigenresonanzfrequenzen des Balgs. Ersetzt man nun bei diesem Bauteil das Außengeflecht durch ein Außengestricke und führt entsprechende dynamische Messungen durch, so erhält man die Kurven in Figur 6. Dort ist zu erkennen, dass die erwähnten Balgeigenresonanzen vollständig bedämpft und auch sonst keine auffälligen Schwingungsamplituden mehr vorhanden sind.

Zusammenfassend lässt sich somit festhalten, dass sich das erfindungsgemäße flexible Leitungselement dadurch auszeichnet, dass es durch Austausch eines inneren Metallwickelschlauches durch ein Innengeflecht in optimaler Art und Weise die nachteilige Wärmeversteifung des flexiblen Leitungselementes vermeidet, so dass das Leitungselement zumindest fast keine sich über die Temperatur ändernde Steifigkeit aufweist. Dadurch dass darüber hinaus das übliche Außengeflecht durch ein Außengestricke ersetzt wird, lassen sich die Balgeigenresonanzen optimal bedämpfen, so dass sich das flexible Leitungselement möglichst nur noch als "passives schwingungsentkoppelndes Bauteil" einsetzen lässt, ohne selbst irgendwelche negativen, bauteilbedingten Einflüsse auf das Ergebnis der von ihm durchzuführenden Schwingungsentkopplung aufzuweisen.

## Patentansprüche

1. Flexibles Leitungselement, insbesondere für Abgasleitungen von Verbrennungsmotoren bei Kraftfahrzeugen, mit einem mit zylindrischen Anschlussenden (5) versehenen schraubengangförmig oder ringgewellten Balg (2) aus Metall und einem koaxial innerhalb des Balgs angeordneten inneren Metallschlauch (3), der mit seinen axialen Endstücken zumindest mittelbar an den Balganschlussenden (5) festgelegt ist, und mit einem auf der radialen Außenseite des Balgs (2) angeordneten äußeren Metallschlauch (4), der mit seinen axialen Endstücken zumindest mittelbar an den Balganschlussenden (5) festgelegt ist,
**dadurch gekennzeichnet,**
**dass** der innere Metallschlauch (3) aus einem Geflechtsschlauch besteht, dessen Außenquerschnitt kleiner als der lichte Innenquerschnitt des Balgs (2) ist, und dass der äußere Metallschlauch (4) aus einem Gestrickeschlauch besteht, dessen lichter Innenquerschnitt kleiner als der lichte Außenquerschnitt des Balgs ist, so dass der äußere Gestrickeschlauch (4) unter Vorspannung am Balg (2) im Bereich von dessen Außenkrempen anliegt.

2. Flexibles Leitungselement nach Anspruch 1,
**dadurch gekennzeichnet,**
**dass** der äußere Gestrickeschlauch (4) über äußere Endhülsen (6) an den Balganschlussenden (5) insbesondere durch Verpressen festgelegt ist.

3. Flexibles Leitungselement nach einem der vorstehenden Ansprüche,
**dadurch gekennzeichnet,**
**dass** der innere Geflechtsschlauch (3) an den Balganschlussenden (5) festgelegt ist.

4. Flexibles Leitungselement nach einem der vorstehenden Ansprüche,
**dadurch gekennzeichnet,**
**dass** der innere Geflechtsschlauch (3) nur mittelbar an den Balganschlussenden (5) festgelegt ist, indem er mit seinen axialen Enden an jeweils einer Innenhülse (7) festgelegt ist, welche wiederum an den Balganschlussenden (5) festgelegt ist.

5. Flexibles Leitungselement nach einem der vorstehenden Ansprüche,
**dadurch gekennzeichnet,**
**dass** die Drahtstärke, also die Dicke eines Geflechtsdrahts des Geflechtsschlauchs (3) zwischen 0,20 mm und 0,40 mm beträgt.

6. Flexibles Leitungselement nach einem der vorstehenden Ansprüche,
**dadurch gekennzeichnet,**
**dass** die Schlaglängen des Geflechtsschlauchs (3) zwischen 30 mm und 190 mm beträgt.

7. Flexibles Leitungselement nach einem der vorstehenden Ansprüche,
**dadurch gekennzeichnet,**
**dass** der Geflechtsschlauch (3) einen flachen Geflechtswinkel aufweist.

8. Flexibles Leitungselement nach zumindest Anspruch 4,
**dadurch gekennzeichnet,**
**dass** der innere Geflechtsschlauch (3) über eine Schweißverbindung an den Innenhülsen (7) festgelegt ist.

9. Flexibles Leitungselement nach einem der vorstehenden Ansprüche,
**dadurch gekennzeichnet,**
**dass** das Außengestricke (4) so ausgelegt ist, dass die Eigenresonanzen des Balgs (2) im Frequenzbereich zwischen 20 und 250 Hz und insbesondere zwischen 80 und 140 Hz bedämpft sind.

10. Flexibles Leitungselement nach einem der vorstehenden Ansprüche,
**dadurch gekennzeichnet,**
**dass** das Leitungselement (1) hinsichtlich seiner Bauteile innerer Geflechtsschlauch (3), Balg (2) und äußerer Gestrickeschlauch (4) so ausgelegt ist, dass es in seinen durch Motorbewegungen vorgegebenen Bewegungen weder im Gestrickeschlauch noch im Geflechtsschlauch in Anschlag gelangt.

11. Flexibles Leitungselement nach einem der vorstehenden Ansprüche,
**dadurch gekennzeichnet,**
**dass** der innere Geflechtsschlauch (3) so ausgebildet ist, dass er keine Wärmeversteifung bei Temperaturen zwischen 400 °C und 700 °C aufweist.

12. Flexibles Leitungselement nach zumindest Anspruch 4,
**dadurch gekennzeichnet,**
**dass** die Innenhülse (7) mit einem sich in Radialrichtung erstreckenden Absatz derart versehen ist, dass sie von einem dem Innenquerschnitt der Balganschlussenden (5) zumindest in etwa entsprechenden Außenquerschnitt auf ein geringeres Querschnittsmaß in einem axial von den Balganschlussenden benachbarten Bereich reduziert ist, und dass in diesem axial von den Balganschlussenden benachbarten Bereich der Innenhülse (7) der innere Geflechtsschlauch (3) so festgelegt ist, dass er im nicht ausgelenkten Zustand des flexiblen Leitungselements (1) einen radialen Abstand gegenüber dem Balg (2) und dessen Innenkrempen aufweist.

## Claims

1. Flexible line element, in particular for exhaust pipes of internal combustion engines in motor vehicles, with a metal bellows (2) which is helical or has annular corrugations and is provided with cylindrical end connectors (5) and with an inner metal hose (3) which is disposed coaxially inside the bellows and is fixed with its axial end pieces at least indirectly on the end connectors (5) of the bellows, and with an outer metal hose which is disposed on the radial outer face of the bellows (2) and is fixed with its axial end pieces at least indirectly on the end connectors (5) of the bellows, **characterised in that** the inner metal hose (3) comprises a braided hose, the external cross-section of which is smaller than the internal cross-section of the bellows (2), and that the outer metal hose (4) comprises a knitted hose, the internal cross-section of which is smaller than the external cross-section of the bellows, so that the outer knitted hose (4) rests under pretension on the bellows (2) in the region of the outer flanges thereof.

2. Flexible line element as claimed in claim 1, **characterised in that** the outer knitted hose (4) is fixed by way of outer end sleeves (6) on the end connectors (5) of the bellows in particular by compression.

3. Flexible line element as claimed in any one of the preceding claims, **characterised in that** the inner braided hose (3) is fixed on the end connectors (5) of the bellows.

4. Flexible line element as claimed in any one of the preceding claims, **characterised in that** the inner braided hose (3) is only fixed indirectly on the end connectors (5) of the bellows **in that** it is fixed with its axial ends on a respective inner sleeve (7) which is in turn fixed on the end connectors (5) of the bellows.

5. Flexible line element as claimed in any one of the preceding claims, **characterised in that** the wire thickness, that is to say the thickness of a braiding wire of a braided hose (3) is between 0.20 mm and 0.40 mm.

6. Flexible line element as claimed in any one of the preceding claims, **characterised in that** the lay of the braided hose (3) is between 30 mm and 190 mm.

7. Flexible line element as claimed in any one of the preceding claims, **characterised in that** the braided hose (3) has a shallow braiding angle.

8. Flexible line element as claimed in at least Claim 4, **characterised in that** the inner braided hose (3) is fixed on the inner sleeves (7) by way of a welded joint.

9. Flexible line element as claimed in any one of the preceding claims, **characterised in that** the outer knitted material (4) is designed so that the internal resonances of the bellows (2) are damped in the frequency range between 20 and 250 Hz and in particular between 80 and 140 Hz.

10. Flexible line element as claimed in any one of the preceding claims, **characterised in that** in terms of its components the inner braided hose (3), bellows (2) and outer knitted hose (4) the line element (1) is designed so that in its movements which are predetermined by engine movements it does not come into contact with either the knitted hose or the braided hose.

11. Flexible line element as claimed in any one of the preceding claims, **characterised in that** the inner braided hose (3) is constructed in such a way that it does not exhibit any heat stiffening at temperatures between 400 °C and 700 °C.

12. Flexible line element as claimed in at least Claim 4, **characterised in that** the inner sleeve (7) is provided with a shoulder extending in the radial direction in such a way that it is reduced from an external cross-section corresponding at least approximately to the internal cross-section of the end connectors (5) of the bellows to a smaller cross-sectional dimension in a region which is adjoined axially by the end connectors of the bellows, and that in this region of the inner sleeve (7) which is adjoined axially by the end connectors of the bellows the inner braided hose (3) is fixed in such a way that it is radially spaced from the bellows (2) and the inner flanges thereof in the undeflected state of the flexible line element (1).

## Revendications

1. Élément de conduite flexible, notamment pour des conduites d'échappement de moteurs thermiques de véhicules automobiles, avec un soufflet (2) en métal, hélicoïdal ou à ondulations annulaires, pourvu d'extrémités de raccordement cylindriques (5), avec un flexible métallique intérieur (3), qui est disposé coaxialement à l'intérieur du soufflet et qui, par ses embouts axiaux, est fixé au moins indirectement aux extrémités de raccordement (5) du soufflet, et avec un flexible métallique extérieur (4), qui est disposé sur le côté extérieur radial du soufflet (2) et qui, par ses embouts axiaux, est fixé au moins indirectement aux extrémités de raccordement (5) du soufflet,
**caractérisé en ce que** le flexible métallique intérieur (3) est constitué d'un flexible tressé dont la section extérieure est inférieure à la section intérieure de passage du soufflet (2), et **en ce que** le flexible métallique extérieur (4) est constitué d'un flexible à mailles dont la section intérieure de passage est inférieure à la section extérieure de passage du soufflet (2), de sorte que le flexible extérieur à mailles (4) s'applique sous précontrainte contre le soufflet (2) dans la région des rebords extérieurs de ce dernier.

2. Élément de conduite flexible selon la revendication 1, **caractérisé en ce que** le flexible extérieur à mailles (4) est fixé aux extrémités de raccordement (5) du soufflet par l'intermédiaire de douilles terminales extérieures (6), notamment par pressage.

3. Élément de conduite flexible selon l'une des revendications précédentes, **caractérisé en ce que** le flexible intérieur tressé (3) est fixé aux extrémités de raccordement (5) du soufflet.

4. Élément de conduite flexible selon l'une des revendications précédentes, **caractérisé en ce que** le flexible intérieur tressé (3) n'est fixé qu'indirectement aux extrémités de raccordement (5) du soufflet, par le fait qu'il est fixé par ses extrémités axiales à une douille intérieure respective (7), qui est elle-même fixée aux extrémités de raccordement (5) du soufflet.

5. Élément de conduite flexible selon l'une des revendications précédentes, **caractérisé en ce que** l'épaisseur du fil métallique, donc l'épaisseur d'un fil métallique de tresse du flexible tressé (3), est comprise entre 0,20 mm et 0,40 mm.

6. Élément de conduite flexible selon l'une des revendications précédentes, **caractérisé en ce que** le pas de câblage du flexible tressé (3) est compris entre 30 mm et 190 mm.

7. Élément de conduite flexible selon l'une des revendications précédentes, **caractérisé en ce que** le flexible tressé (3) présente un angle de tresse plat.

8. Élément de conduite flexible selon la revendication 4, **caractérisé en ce que** le flexible intérieur tressé (3) est fixé aux douilles intérieures (7) au moyen d'un assemblage soudé.

9. Élément de conduite flexible selon l'une des revendications précédentes, **caractérisé en ce que** le flexible extérieur à mailles (4) est conçu de telle sorte que les résonances propres du soufflet (2) dans la plage de fréquences entre 20 et 250 Hz et notamment entre 80 et 140 Hz sont amorties.

10. Élément de conduite flexible selon l'une des revendications précédentes, **caractérisé en ce que** l'élément de conduite (1) est conçu, quant à ses éléments constitutifs - flexible intérieur tressé (3), soufflet (2) et flexible extérieur à mailles (4) -, de telle sorte que, lors de ses mouvements imposés par les mouvements du moteur, il n'arrive en butée ni dans le flexible à mailles ni dans le flexible tressé.

11. Élément de conduite flexible selon l'une des revendications précédentes, **caractérisé en ce que** le flexible intérieur tressé (3) est conçu de telle sorte qu'il ne présente pas de raidissement d'origine thermique à des températures comprises entre 400 °C et 700 °C.

12. Élément de conduite flexible selon au moins la revendication 4, **caractérisé en ce que** la douille intérieure (7) est pourvue d'un décrochement s'étendant en direction radiale de telle sorte qu'elle est, dans une région axialement voisine des extrémités de raccordement du soufflet, réduite d'une section extérieure correspondant au moins approximativement à la section intérieure des extrémités de raccordement (5) du soufflet à une dimension de section inférieure, et **en ce que**, dans cette région axialement voisine des extrémités de raccordement du soufflet, la douille intérieure (7) du flexible intérieur tressé (3) est fixée de telle sorte qu'elle présente, dans l'état non dévié de l'élément de conduite flexible (1), une distance radiale par rapport au soufflet (2) et aux rebords intérieurs de ce dernier.
